# EUROPEAN PATENT APPLICATION

(11) **EP 4 668 137 A1**
(43) Date of publication of application: **24.12.2025**
(21) Application number: 24755970.1
(22) Date of filing: 30.01.2024
(51) Int. Cl.: G06F 16/9535, G06F 16/9538, G06F 3/04817

(54) **MULTIMEDIA RESOURCE PROCESSING METHOD AND APPARATUS, DEVICE AND STORAGE MEDIUM**

(30) Priority: 15.02.2023 CN 202310163434
(71) Applicant: Beijing Zitiao Network Technology Co., Ltd., Beijing 100190 (CN)
(72) Inventor: ZHAO, Chunmeng, Beijing 100028 (CN); ZHOU, Hanshu, Beijing 100028 (CN); YANG, Pei, Beijing 100028 (CN); ZHANG, Tianzheng, Beijing 100028 (CN)
(74) Representative: Grünecker Patent- und Rechtsanwälte PartG mbB
(86) International application number: PCT/CN2024/074715
(87) International publication number: WO 2024/169596

(57) **Abstract**

The present disclosure provides a method and apparatus, device and a storage medium for multimedia resource processing, and the method includes: displaying a first multimedia resource on a resource display page, a genre switch control is provided on the resource display page, in response to a trigger operation for the genre switch control, determining a target switch genre, and obtaining a second multimedia resource based on the first multimedia resource and the target switch genre, wherein the second multimedia resource is of the target switch genre, and the first multimedia resource and the second multimedia resource are of different genres of a same multimedia work, and switch from the first multimedia resource to the second multimedia resource on the resource display page. Therefore, the embodiments of the present disclosure can realize a switching display function for different genres of the same multimedia work based on a target switch control on the resource display page, so that requirements of different users on different display genres of a same multimedia resource are met.

## Description

This application claims priority of Chinese Patent Application No. 202310163434.2, entitled "METHOD, APPARATUS, DEVICE, AND STORAGE MEDIUM FOR MULTIMEDIA RESOURCE PROCESSING" filed on February 15, 2023, the entire content of which is incorporated herein by reference.

### FIELD

The present disclosure relates to a field of data processing, and in particular to a method, apparatus and device, and a storage medium for multimedia resource processing.

### BACKGROUND

With a rapid development of multimedia information technology, a demand for multimedia resource processing is higher and higher, for example, in a process of viewing multimedia resources, different users have different requirements on the display of multimedia resources.

Therefore, how to meet the requirements of different users for different display genres of the same multimedia resource becomes a technical problem to be solved.

### SUMMARY

To resolve the foregoing technical problem, the embodiments of the present disclosure provide a method for multimedia resource processing.

According to a first aspect, the present disclosure provides a method for multimedia resource processing, and the method includes: displaying a first multimedia resource on a resource display page, wherein the first multimedia resource is of a first genre, and a genre switch control is provided on the resource display page; in response to a trigger operation for the genre switch control, determining a target switch genre; obtaining a second multimedia resource based on the first multimedia resource and the target switch genre; wherein the second multimedia resource is of the target switch genre, and the first multimedia resource and the second multimedia resource are of different genres of a same multimedia work; and switching from the first multimedia resource to the second multimedia resource on the resource display page.

In an optional implementation, the resource display page is a search result page, and before the displaying the first multimedia resource on the resource display page, the method further includes: determining, based on current search behavior information and/or genre preference information of a current user, a genre to be displayed corresponding to a search result of the current user as the first genre. Correspondingly, the displaying the first multimedia resource on the resource display page includes: displaying the first multimedia resource of the first genre on the search result page.

In an optional implementation, the switching from the first multimedia resource to the second multimedia resource on the resource display page includes: displaying a predetermined pop-up-layer panel over the resource display page, and displaying the second multimedia resource on the predetermined pop-up-layer panel; or displaying the second multimedia resource on the resource display page.

In an optional implementation, the genre switch control includes an image-text genre switch control, and the image-text genre switch control includes respective switch sub-controls corresponding to a plurality of image-text segments divided by the first multimedia resource. The determining a target switch genre in response to a trigger operation for the genre switch control includes: determining an image-text genre in response to a trigger operation for a target switch sub-control. Correspondingly, the switching from the first multimedia resource to the second multimedia resource on the resource display page includes: switching from the first multimedia resource to the second multimedia resource on the resource display page, with an image-text segment of the second multimedia resource corresponding to the target switch sub-control being positioned for display.

In an optional implementation, the resource display page is a recommended content display page, and before the displaying the first multimedia resource on the resource display page, the method further includes: determining, based on the current time information and/or genre preference information of the current user, a genre to be displayed corresponding to a recommended content as the first genre. Correspondingly, the displaying the first multimedia resource on the resource display page includes: displaying the first multimedia resource of the first genre on the recommended content display page.

In an optional implementation, the target switch genre is an image-text genre, the second multimedia resource includes a plurality of image-text segments, and at least one of the plurality of image-text segments includes a video segment with an image cover. After the switching from the first multimedia resource to the second multimedia resource on the resource display page, the method further includes: in response to a playback trigger operation for an image cover of a target image-text segment of the at least one image-text segment, playing a video segment corresponding to the image cover.

In an optional implementation, the method further includes: in response to a genre editing trigger operation on a post page of a third multimedia resource, generating a fourth multimedia resource of a target edit genre based on the third multimedia resource; and posting a multimedia work containing the third multimedia resource and the fourth multimedia resource.

In an optional implementation, before the posting the multimedia work containing the third multimedia resource and the fourth multimedia resource, the method further includes: displaying the fourth multimedia resource on a resource edit page, and receiving an edit operation for the fourth multimedia resource based on the resource edit page.

In an optional implementation, the resource edit page is provided with a genre edit switch control, and the method further includes: determining a target switching edit genre in response to a trigger operation for the genre edit switch control on the resource edit page; generating a fifth multimedia resource of the target edit switch genre based on the third multimedia resource; and posting the multimedia work containing the third multimedia resource, the fourth multimedia resource and the fifth multimedia resource.

In an optional implementation, the third multimedia resource is of a video genre, and the generating a fourth multimedia resource of a target edit genre based on the third multimedia resource includes: dividing a plurality of video segments from the third multimedia resource based on analysis of a content of the third multimedia resource; generating a text segment, a voice segment, and/or a cover image based on the video segments; and generating a fourth multimedia resource of a target edit genre based on the video segments, the text segment, the voice segment, and/or the cover image.

According to a second aspect, the present disclosure provides a apparatus for multimedia resource processing, the apparatus includes: a display module configured to display a first multimedia resource on a resource display page, wherein the first multimedia resource is of a first genre, and a genre switch control is provided on the resource display page; a first determination module, configured to in response to a trigger operation for the genre switch control, determine a target switch genre; an obtaining module configured to obtain a second multimedia resource based on the first multimedia resource and the target switch genre; wherein the second multimedia resource is of the target switch genre, and the first multimedia resource and the second multimedia resource are of different genres of the same multimedia work; and a switch module configured to switching from the first multimedia resource to the second multimedia resource on the resource display page.

According to a third aspect, the present disclosure provides a computer-readable storage medium, the computer-readable storage medium stores instruction which, when executed on a terminal device, cause the terminal device to perform the foregoing method.

According to a fourth aspect, the present disclosure provides a device for multimedia resource processing, including: a memory, a processor, and a computer program stored in the memory and executable on the processor, wherein the processor executes the computer program to implement the foregoing method.

According to a fifth aspect, the present disclosure provides a computer program product, the computer program product includes a computer program/instruction which, when executed by a processor, the foregoing method is implemented.

Compared with the prior art, a technical solution provided by the embodiments of the present disclosure have at least the following advantages:

the embodiments of the present disclosure provide a method for multimedia resource processing, displaying a first multimedia resource on a resource display page, wherein the first multimedia resource is of a first genre, and a genre switch control is provided on the resource display page, in response to a trigger operation for the genre switch control, determining a target switching genre, obtaining a second multimedia resource based on the first multimedia resource and the target switch genre, wherein the second multimedia resource is of a target switch genre, and the first multimedia resource and the second multimedia resource are of different genres of a same multimedia work, and switching from the first multimedia resource to the second multimedia resource on the resource display page. Therefore, the embodiments of the present disclosure can realize a switching display function for different genres of the same multimedia work based on a target switch control on the resource display page, so that requirements of different users on different display genres of a same multimedia resource are met.

### BRIEF DESCRIPTION OF DRAWINGS

The drawings herein are incorporated in and constitute a part of the specification, illustrating embodiments consistent with the present disclosure and, together with the specification, serve to explain the principles of the present disclosure.

In order to more clearly illustrate technical solutions in the embodiments of the present disclosure or in the prior art, the drawings used in the description of the embodiments or the prior art will be briefly introduced below, and it is obvious to those skilled in the art that other drawings may be obtained according to these drawings without creative labor.
FIG. 1 is a flowchart of a method for multimedia resource processing provided by the embodiments of the present disclosure;
FIG. 2 is a schematic diagram of a resource display page provided by the embodiments of the present disclosure;
FIG. 3 is a schematic diagram of another resource display page provided by the embodiments of the present disclosure;
FIG. 4 is a schematic diagram of still another resource display page provided by the embodiments of the present disclosure;
FIG. 5 is a schematic diagram of still another resource display page provided by the embodiments of the present disclosure;
FIG. 6 is a schematic diagram of still another resource display page provided by the embodiments of the present disclosure;
FIG. 7 is a schematic diagram of still another resource display page provided by the embodiments of the present disclosure;
FIG. 8 is a schematic diagram of still another resource display page provided by the embodiments of the present disclosure;
FIG. 9 is a schematic diagram of a resource post page provided by the embodiments of the present disclosure;
FIG. 10 is a schematic diagram of a resource edit page provided by the embodiments of the present disclosure;
FIG. 11 is a schematic structural diagram of an apparatus for multimedia resource processing provided by the embodiments of the present disclosure;
FIG. 12 is a schematic structural diagram of a device for multimedia resource processing provided by the embodiments of the present disclosure.

### DETAILED DESCRIPTION

In order to be able to more clearly understand the above purposes, features and advantages of the present disclosure, solutions of the present disclosure will be further described below. It should be noted that, in a case of no conflict, the features in the embodiments and the embodiments of the present disclosure may be combined with each other.

Many specific details are set forth in following description to facilitate a thorough understanding of the present disclosure, but the present disclosure may also be implemented in other ways other than those described herein; it is apparent that the embodiments in the specification are only a part of the embodiments of the present disclosure, not all embodiments.

In order to meet the needs of different users for different display genres of the same multimedia resource, the embodiments of the present disclosure provide a method for multimedia resource processing.

Specifically, displaying a first multimedia resource on a resource display page, wherein the first multimedia resource is of a first genre, and a genre switch control is provided on the resource display page, in response to a trigger operation for the genre switch control, determining a target switch genre, obtaining a second multimedia resource based on the first multimedia resource and the target switch genre, wherein the second multimedia resource is of the target switch genre, and the first multimedia resource and the second multimedia resource are of different genres of a same multimedia work, and switching from the first multimedia resource to the second multimedia resource on the resource display page. Therefore, the embodiments of the present disclosure can realize a switching display function for different genres of the same multimedia work based on a target switch control on the resource display page, so that requirements of different users on different display genres of a same multimedia resource are met.

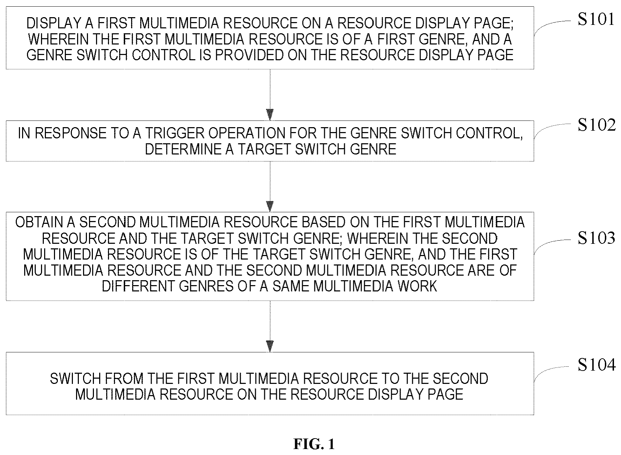

Based on this, the embodiments of the present disclosure further provide a method for multimedia resource processing, referring to FIG. 1, which is a flowchart of a method for multimedia resource processing provided by the embodiments of the present disclosure, the method includes:
S101: Displaying a first multimedia resource on a resource display page.

In some embodiments, the first multimedia resource is of a first genre, and a genre switch control is provided on the resource display page.

The method for multimedia resource processing provided by the embodiments of the present disclosure may be applied to a client, the client has a multimedia resource processing function, and the client may be deployed on a terminal such as a smart phone, a tablet personal computer (Tablet PC), a notebook computer, and the like.

In the embodiments of the present disclosure, the resource display page refers to a page for displaying a multimedia resource, and specifically, the resource display page may be a search result page, a recommended content display page, and the like, and the resource display page is not limited in the embodiments of the present disclosure.

The first multimedia resource is of the first genre. For example, the first genre may be a video genre, an image-text genre, a text genre, and the like.

The genre switch control is provided on the resource display page, which may complete switching of a current genre once per click by a user. The resource display page may also be provided with a plurality of genre switch controls, and different genres switch controls correspond to different genres. When the user clicks one of the genre switch controls, it switches to a genre corresponding to the genre switch control. The specific presentation form of the genre switch control is not limited in the embodiments of the present disclosure.

In order to facilitate understanding of the embodiments of the present disclosure, the following uses the resource display page as the search result page and the recommended content display page for example, respectively.

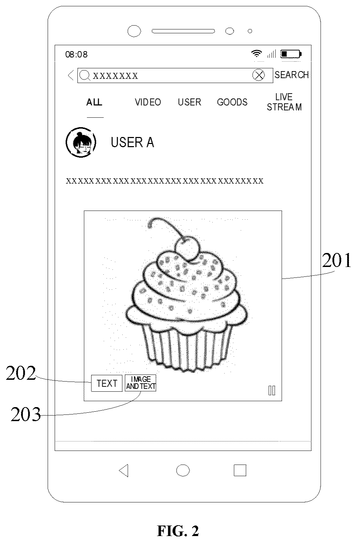

In a scenario in which the resource display page is the search results page, referring to FIG. 2, which is a schematic diagram of a resource display page provided by the embodiments of the present disclosure. As shown in FIG. 2, the search result page shows a first multimedia resource 201, a first genre switch control 202, and the second genre switch control 203 of the video genre. The first genre switch control 202 is configured to switch the first multimedia resource 201 to the text genre, and the second genre switch control 203 is configured to switch the first multimedia resource 201 to the image-text genre.

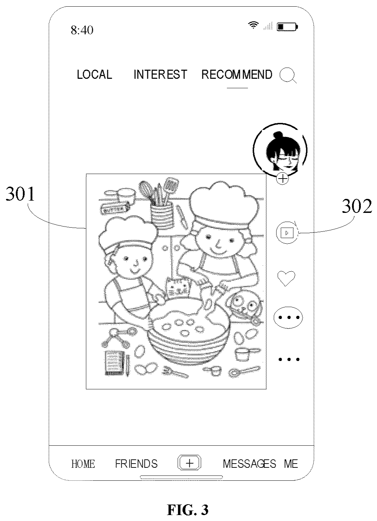

In a scenario in which the resource display page is the recommended content display page, referring to FIG. 3, which is a schematic diagram of another resource display page provided by the embodiments of the present disclosure. As shown in FIG. 3, the recommended content display page is provided with a video genre multimedia resource 301 and a genre switch control 302, wherein the genre switch control 302 is configured to realize a genre switching of the video genre multimedia resource 301.

In an optional implementation, in a scenario in which the resource display page is the search result page, before displaying the search result of the current user, the genre to be displayed corresponding to the search result of the current user is first determined as the first genre based on the current search behavior information and/or the genre preference information of the current user.

In some embodiments, in a scenario in which the resource display page is the search result page, before displaying the search result of the current user, the genre to be displayed corresponding to the search result of the current user is first determined as the first genre based on the current search behavior information of the current user. In some embodiments, the genre to be displayed corresponding to the search result of the current user may be determined as the first genre based on the genre preference information of the current user. Alternatively, in some embodiments, the genre to be displayed corresponding to the search result of the current user may be determined as the first genre in combination with the current search behavior information and the genre preference information of the current user.

Specifically, the current search behavior information may include search keyword information input by the user in a search input box on the search result page, for example, when search keyword information input by the user on the search result page is "how to make a cheese cake", based on the search keyword information, it may be determined that a method for making the cheese cake is presented to the user in a form of the video genre. That is, the video genre is determined as the genre to be displayed corresponding to the search result of the current user as the first genre.

The current search behavior information may further include a behavior of the user modifying the inputted keyword information on the search result page, which can reflect a genre preference of the user. For example, when the keyword information input by the user for the first time on the search result page is "cheese cake", a refined cheese cake image may be presented to the user in the image-text genre. If the user re-inputs the keyword information on the search result page due to an unsatisfactory the search result, and the keyword information re-inputted on the search result page is "how to make the cheese cake", "method for making cheese cake" may be presented to the user in a form of the video genre.

**The** genre preference information refers to the genre preference information that the user historically views the multimedia resource. Specifically, for example, the genre preference information may be the genre preference information of the user near 30 days. If the genre preference information of the user near 30 days is the video genre, the video genre is determined as the genre to be displayed corresponding to the search result of the current user as the first genre.

Correspondingly, after a determination of the first genre, displaying the first multimedia resource of the first genre on the search result page.

In another optional implementation, in a scenario in which the resource display page is the recommended content display page, the genre to be displayed corresponding to the recommended content may be determined as the first genre based on the current time information and/or genre preference information of the current user.

In some embodiments, in a scenario in which the resource display page is the recommended content display page, the genre to be displayed corresponding to the recommended content may be determined as the first genre based on the current time information. In some embodiments, the genre to be displayed corresponding to the recommended content may be determined as the first genre based on the genre preference information of the current user. In some embodiments, the genre to be displayed corresponding to the recommended content may be determined as the first genre based on the current time information and the genre preference information of the current user.

Specifically, the current time information refers to a time when the user views the recommended content. For example, the time when the user views the recommended content is a dinner time 18: 00, in order to facilitate the user to view the current recommended content, the video genre may be determined as the genre to be displayed corresponding to the recommended content as the first genre.

The genre preference information of the current user refers to genre preference information determined based on the current user history viewing the recommended content. If a playing frequency of a multimedia content of the user for the image-text genre is high, the genre preference information thereof includes image-text genre, then on the recommended content display page, the image-text genre is determined as the genre to be displayed corresponding to the recommended content as the first genre.

Correspondingly, after a determination of the first genre, displaying the first multimedia resource of the first genre on the recommended content display page.

S102: in response to a trigger operation for the genre switch control, determining a target switch genre.

In the embodiments of the present disclosure, the user may determine the target switch genre through the trigger operation for the genre switch control, specifically, the trigger operation of the genre switch control may include a plurality of manners, the following implementations are all examples, and implementations of the trigger operation of the genre switch control are not limited in the embodiments of the present disclosure.

In an optional implementation, in a scenario in which the resource display page is the search result page, when a plurality of genre switch controls are provided on the search result page, the trigger operation of the genre switch control may be implemented by a trigger operation of the genre switch control provided on the search result page. Specifically, a click operation is triggered for the genre switch control provided on the search result page to determine the target switch genre.

The target switch genre is a corresponding genre after the click operation is triggered for the genre switch control provided on the search result page.

With continued reference to FIG. 2, the plurality of genre switch controls are shown on the search page, wherein the plurality of genre switch controls include the first genre switch control 202 and the second genre switch control 203. The first genre control 202 is configured to switch the current genre to the text genre, and the second genre switch control 203 is configured to switch the current genre to the image-text genre. Specifically, after the user triggers a click operation on the first genre switch control 202 provided on the search result page, the current genre is switched to the text genre, and the text genre is taken as the target switch genre. After the user triggers the click operation on the second genre switch control 203 provided on the search result page, the current genre is switched to the image-text genre, and the image-text genre is taken as the target switch genre.

In another optional implementation, in a scenario in which the resource display page is the recommended content display page, the trigger operation of the genre switch control may be implemented by the trigger operation of the genre switch control provided on the recommended content display page. Specifically, a click operation is triggered for the genre switch control provided on the recommended content display page to determine the target switch genre.

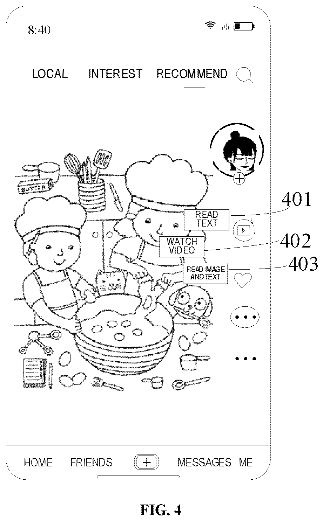

With continued reference to FIG. 3, after the user triggers the click operation on the genre switch control 302 (which may be referred to as a genre switching primary control) provided on the recommended content display page, a plurality of genre switching secondary controls may be displayed. The genre switching secondary control may include a text genre switching secondary control 401, a video genre switching secondary control 402, and an image-text genre switching secondary control 403. As shown in FIG. 4, a text genre switching secondary control 401, a video genre switching secondary control 402, and an image-text genre switching secondary control 403 are shown. The text genre switching secondary control 401 is configured to switch the current genre to the text genre, the video genre switching secondary control 402 is configured to switch the current genre to the video genre, and the image-text genre switching secondary control 403 is configured to switch the current genre to the image-text genre. For example, after the user triggers a click operation for the text genre switching secondary control 401 provided on the recommended content display page, the current genre is switched to the text genre, and the text genre is taken as the target switch genre.

In addition, the genre switch control includes an image-text genre switch control including switching sub-controls corresponding to a plurality of image-text segments divided by the first multimedia resource.

In an optional implementation, determining the image-text genre, in response to a trigger operation for a target switching sub-control.

In some embodiments, the target switching sub-control may be any switching sub-control of the above.

In some embodiments, in a scenario in which the resource display page is the search result page, the trigger operation for the target switching sub-control may be implemented by a trigger operation of the target switching sub-control provided on the search result page. Specifically, the click operation is triggered for the target switching sub-control provided on the search result page to determine the image-text genre.

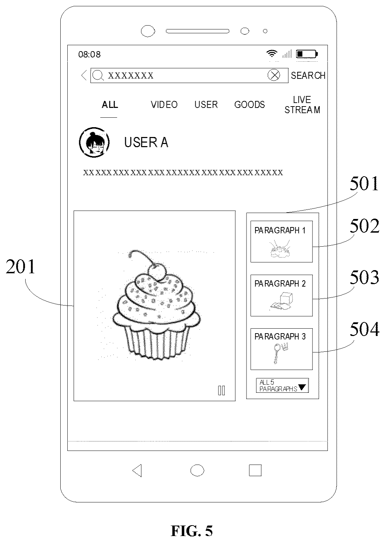

In order to facilitate understanding of the embodiments of the present disclosure, referring to FIG. 5, which is a schematic diagram of still another resource display page provided by the embodiments of the present disclosure. As shown in FIG. 5, the first multimedia resource 201 and an image-text genre switch control 501 are displayed on the search result page. The image-text genre switch control 501 includes the switching sub-controls corresponding to a plurality of image-text segments divided by the first multimedia resource. For example, the image-text genre switch control 501 includes a first switching sub-control 502 corresponding to the first segment of image-text segment divided by the first multimedia resource, a second switching sub-control 503 corresponding to the segment 2 image-text segment divided by the first multimedia resource, a third switching sub-control 504 corresponding to the segment 3 image-text segment divided by the first multimedia resource, and the like. The first switching sub-control 502 is configured to switch the first multimedia resource to a first segment image-text segment of the second multimedia resource, the second switching sub-control 503 is configured to switch the first multimedia resource to the first segment image-text segment of a second multimedia resource, and the third switching sub-control 504 is configured to switch the first multimedia resource to the first segment image-text segment of the second multimedia resource. The second multimedia resource is the image-text genre. For example, after the user triggers a click operation on the first switching sub-control 502 provided on the search result page, the first multimedia resource is switched to the first segment image-text segment of the second multimedia resource.

S103: Obtaining a second multimedia resource based on the first multimedia resource and the target switch genre.

In some embodiments, the second multimedia resource is of a target switch genre, and the first multimedia resource and the second multimedia resource are of different genres of a same multimedia work.

In some embodiments, after the target switch genre is determined, the target switch genre corresponding to the first multimedia resource is obtained as the second multimedia resource based on the first multimedia resource and the target switch genre.

S104: switching from the first multimedia resource to the second multimedia resource on the resource display page.

In some embodiments, after the second multimedia resource is obtained, the first multimedia resource is switched to the second multimedia resource on the resource display page, to implement a genre switching of the multimedia resource.

**In** an optional implementation, determining an image-text genre in response to a trigger operation for the target switching sub-control, and the second multimedia resource is obtained based on the first multimedia resource and the image-text genre. Switching from the first multimedia resource to the second multimedia resource, with an image-text segment of the second multimedia resource corresponding to the target switch sub-control being positioned for display.

In some embodiments, the target switching sub-control is a sub-control of the image-text switch control.

In the embodiments of the present disclosure, in a scenario in which the resource display page is the search result page, after receiving the trigger operation of the user for the target switch sub-control, determining the genre to which the first multimedia resource is to be switched is the image-text genre. The image-text genre corresponding to the first multimedia resource is obtained as the second multimedia resource based on the first multimedia resource and the image-text genre. Switching from the first multimedia resource to the second multimedia resource, with the image-text segment of the second multimedia resource corresponding to the target switch sub-control being positioned for display.

With continued reference to FIG. 5, it is assumed that the target switching sub-control is the first switching sub-control 502. Specifically, after receiving the trigger operation of the user for the first switching sub-control 502, switching from the first multimedia resource to the second multimedia resource, with the image-text segment of the second multimedia resource corresponding to the first switch sub-control 502 being positioned for display.

In addition, in order to improve viewing experience of the user, the second multimedia resource may be displayed on the resource display page in a form of a predetermined pop-up-layer panel. In an optional implementation, displaying the predetermined pop-up-layer panel over the resource display page, and displaying the second multimedia resource on the predetermined pop-up-layer panel.

A specific presentation form of the predetermined pop-up-layer panel is not limited in the embodiments of the present disclosure.

In the embodiments of the present disclosure, in a scenario in which the resource display page is a search result page, after receiving the trigger operation of the user for the genre switch control, displaying the predetermined pop-up-layer panel over the search result page, and displaying the second multimedia resource on the predetermined pop-up-layer panel.

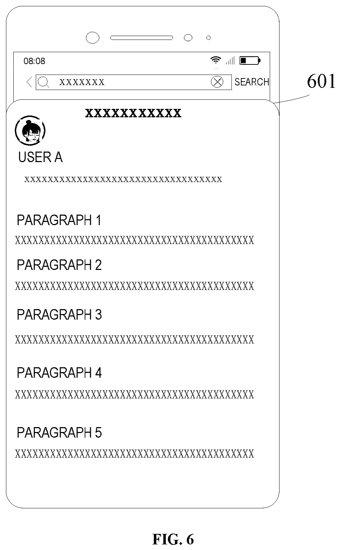

With continued reference to FIG. 2, after the user performs the click operation on the first genre switch control 202 displayed on the search result page, determining the target switch genre is a text genre, and displaying the predetermined pop-up-layer panel over the search result page. As shown in FIG. 6, a predetermined pop-up-layer panel 601 is shown, and the second multimedia resource is displayed on the predetermined pop-up-layer panel 601.

In an optional implementation, after obtaining the second multimedia resource based on the first multimedia resource and the target switch genre, displaying the second multimedia resource on the resource display page.

In the embodiments of the present disclosure, after obtaining the second multimedia resource based on the first multimedia resource and the target switch genre, the first multimedia resource is replaced with the second multimedia resource, so that the second multimedia resource is displayed on the resource display page.

In addition, when the target switch genre is an image-text genre, the second multimedia resource may include a plurality of image-text segments, and at least one of the plurality of image-text segments includes a video segment with an image cover.

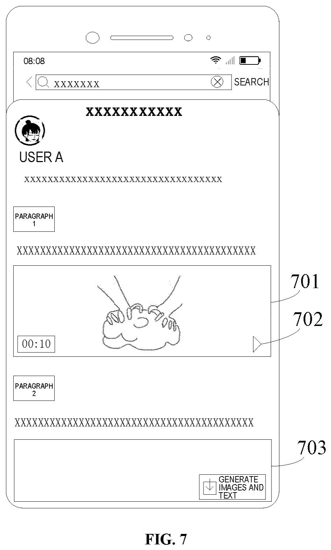

Specifically, in a scenario in which the resource display page is a search result page, referring to FIG. 7, FIG. 7 is a schematic diagram of still another resource display page provided by the embodiments of the present disclosure. Specifically, the second multimedia resource includes a plurality of image-text segments, such as a first image-text segment 701 and a second image-text segment 703, wherein the first image-text segment 701 includes a video segment with an image cover.

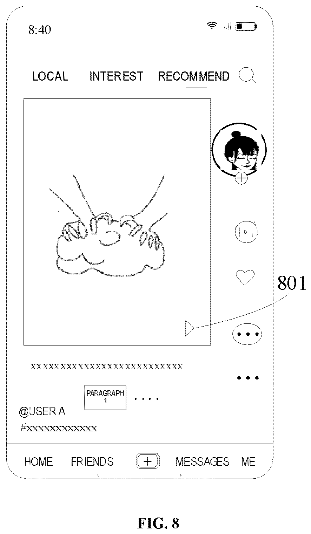

In a scenario in which the resource display page is the recommended content display page, referring to FIG. 8, which is a schematic diagram of still another resource display page provided by the embodiments of the present disclosure. The first segment image-text segment includes a video segment with an image cover. The user may switch the plurality of image-text segments corresponding to the second multimedia resource by sliding left and right.

In an optional implementation, after the first multimedia resource is switched to the second multimedia resource on the resource display page, in response to a playback trigger operation for the image cover of the target image-text segment in the at least one image-text segment, playing a video segment corresponding to the image cover.

In some embodiments, the target image-text segment is any video segment with an image cover in the second multimedia resource.

In the embodiments of the present disclosure, after the first multimedia resource is switched to the second multimedia resource on the resource display page, after receiving a trigger operation of the user for the play control in the image cover of the target image-text segment in the at least one image-text segment, playing the video segment corresponding to the image cover.

In a scenario in which the resource display page is the search result page, with continued referring to FIG. 7, the first image-text segment 701 represents the target image-text segment. Specifically, after receiving a click operation of the user for the first play control 702 in the image cover of the first image-text fragment 701, playing the video segment corresponding to the image cover of the first image-text fragment 701.

In a scenario in which the resource display page is the recommended content display page, with continued reference to FIG. 8, displaying the first segment image-text segment corresponding to the second multimedia resource, and the first segment image-text segment represents the target image-text segment. Specifically, after receiving a click operation of the user for the second play control 801 in the image cover of the first segment of image-text fragment, displaying the video segment corresponding to the image cover of the first segment of image-text fragment.

In the method for multimedia resource processing provided by the embodiments of the present disclosure, displaying the first multimedia resource on the resource display page. The first multimedia resource is of a first genre, and a genre switch control is provided on the resource display page. In response to a trigger operation for the genre switch control, determining a target switch genre, obtaining a second multimedia resource based on the first multimedia resource and the target switch genre. The second multimedia resource is of the target switch genre, and the first multimedia resource and the second multimedia resource are of different genres of a same multimedia work. Switching from the first multimedia resource to the second multimedia resource on the resource display page. Therefore, the embodiments of the present disclosure can realize a switching display function for different genres of the same multimedia work based on a target switch control on the resource display page, so that requirements of different users on different display genres of a same multimedia resource are met.

On a basis of the foregoing embodiments, both the first multimedia resource and the second multimedia resource that are displayed on the resource display page may be from the multimedia resource published by the user on a post page.

In an optional implementation, in response to a genre edit trigger operation on the post page of a third multimedia resource, generating a fourth multimedia resource of the target edit genre based on the third multimedia resource, and posting a multimedia work containing the third multimedia resource and the fourth multimedia resource.

In some embodiments, the third multimedia resource may be any type of genre, for example, the third multimedia resource may be a video genre, a text genre, a text genre, or the like.

Specifically, the third multimedia resource and the fourth multimedia resource are of different genres of a same multimedia work.

In the embodiments of the present disclosure, the genre edit trigger operation may include various manners, the following implementations are examples, and implementations of the genre edit trigger operation are not limited in the embodiments of the present disclosure.

In an optional implementation, the genre edit trigger operation may be to trigger a click operation for a genre switch edit mode control and a next button provided on the post page, and generate the fourth multimedia resource of the target edit genre based on the third multimedia resource.

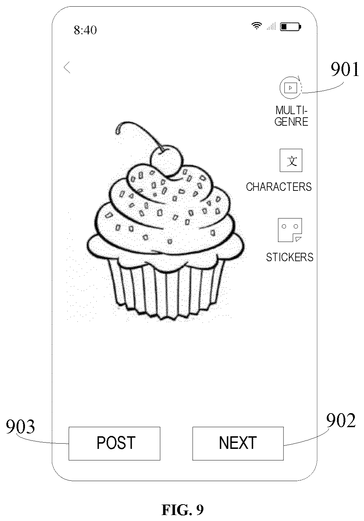

For ease of understanding, referring to FIG. 9, which is a schematic diagram of a resource post page provided by the embodiments of the present disclosure, as shown in FIG. 9, a third multimedia resource to be posted by the user, a genre edit mode control 901, and a next button 902 are shown, and specifically, the fourth multimedia resource of a target edit genre is generated based on the third multimedia resource for a click operation triggered by the user on the genre edit mode control 901 and the next button 902 respectively on the post page.

Taking the third multimedia resource of the video genre as an example, generating the fourth multimedia resource of the target edit genre based on the third multimedia resource may be implemented in the following manner.

In an optional implementation, dividing a plurality of video segments from the third multimedia resource based on analysis of a content of the third multimedia resource. generating a text segment, a voice segment, and/or a cover image based on the video segment,. Generating a fourth multimedia resource of the target edit genre based on the video segments, the text segment, the voice segment and/or the cover image.

In this embodiment of the present disclosure, a content of the third multimedia resource may be analyzed through a video segmentation algorithm based on the multi-genre generator, to divide a plurality of video segments from the third multimedia resource. Then, the plurality of video segments are analyzed to generate the text segment, the voice segment, and the cover image. The fourth multimedia resource of the target edit genre is generated based on the video segment, the text segment, the voice segment and the cover image.

It should be noted that, based on the video segment, the text segment, and the voice segment, and based on the video segment, the text segment, and the cover image, a manner of generating the fourth multimedia resource of the target edit genre is referred to the foregoing description.

For ease of understanding, taking the target edit genre as the text genre as an example, the content of the third multimedia resource may be analyzed through a video segmentation algorithm based on a multi-genre generator, and a plurality of video segments may be divided from the third multimedia resource. Then, the plurality of video segments are analyzed to generate the text segment and the voice segment. The fourth multimedia resource of the text genre is generated based on the video segment, the text segment, and the voice segment. Specifically, the fourth multimedia resource may be played in a voice manner by triggering a voice playing control by the user in addition to displaying through the text genre.

In an optional implementation, displaying the fourth multimedia resource on the resource edit page, and receiving an edit operation for the fourth multimedia resource based on the resource edit page.

In this embodiment of the present disclosure, an edit operation may be performed on the displayed fourth multimedia resource on the resource edit page. Specifically, the edit operation may be performed on the fourth multimedia resource based on the trigger operation of the edit control provided on the resource edit page.

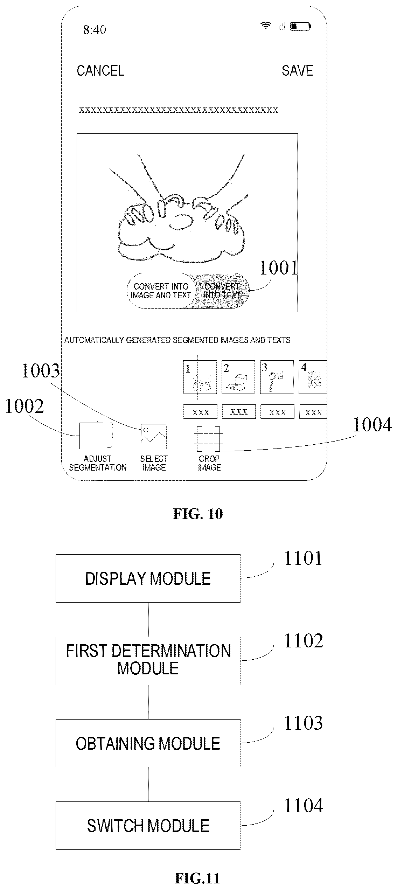

FIG. 10 is a schematic diagram of a resource edit page provided by the embodiments of the present disclosure. The user may perform the edit operation on the fourth multimedia resource for the trigger operation of the first edit control 1002, the second edit control 1003, and the third edit control 1004 that are provided on the resource edit page. The first edit control 1002 is configured to segment and adjust the fourth multimedia resource, the second edit control 1003 is configured to replace a picture in the fourth multimedia resource, and the third edit control 1004 is configured to crop the picture in the fourth multimedia resource. For example, when a click operation triggered by the user for the third edit control 1004 provided on the resource edit page, the image in the fourth multimedia resource may be cropped. After the edit operation for the fourth multimedia resource is completed, a saving button is clicked to generate the fourth multimedia resource of the target edit genre. After the user clicks the save button, the current page jumps again to the post page of the third multimedia resource shown in FIG. 9. After the user clicks the post button 903, the multimedia work containing the third multimedia resource and the fourth multimedia resource may be posted. After the user clicks the next button 902, the fifth multimedia resource of the target edit switch genre may be triggered to be generated. For details, refer to the following description.

Further, the resource edit page is further provided with the genre edit switch control for switching different genres.

In an optional implementation, determining a target switching edit genre in response to a trigger operation for the genre edit switch control on the resource edit page. Generating a fifth multimedia resource of the target edit switch genre based on the third multimedia resource, and posting the multimedia work containing the third multimedia resource, the fourth multimedia resource, and the fifth multimedia resource.

In some embodiments, the fifth multimedia resource and the fourth multimedia resource are of different genres of the same multimedia work.

The target switching edit genre and the target edit genre are of different genres.

In the embodiments of the present disclosure, it is assumed that the target edit genre is the image-text genre. After generating the fourth multimedia resource of the image-text genre, the current page is returned to the post page of the third multimedia resource again. After receiving the genre edit trigger operation on the post page for the third multimedia resource, the method jumps to the resource edit page. After receiving the trigger operation on the genre edit switch control on the resource edit page, the target switching edit genre is determined. It is assumed that the target switching edit genre is the text genre, and a fifth multimedia resource of the text genre is generated based on the third multimedia resource. Then, the multimedia works of the third multimedia resource, the fourth multimedia resource, and the fifth multimedia resource are posted.

With continued reference to FIG. 10, an example in which the target edit genre is an image-text genre is continued. After the user clicks the save button to generate the fourth multimedia resource of the image-text genre, the current page returns to the post page of the third multimedia resource again as shown in FIG. 9. After the genre edit trigger operation on the post page of the third multimedia resource, the resource edit page shown in FIG. 10 is redirected again. After receiving the trigger operation for the genre edit switch control 1001 on the resource edit page, the current image-text genre is switched to the text genre. Determining the text genre as the target switching edit genre, and continuing to click the save button. The fifth multimedia resource of the text genre is generated based on the third multimedia resource, and the current page is returned to the post page of the third multimedia resource again as shown in FIG. 9. After the user clicks the post button 903, the multimedia work containing the third multimedia resource, the fourth multimedia resource, and the fifth multimedia resource may be posted.

Based on the foregoing method embodiments, the present disclosure further provides an apparatus for multimedia resource processing, referring to FIG. 11, which is a schematic structural diagram of the apparatus for multimedia resource processing provided by the embodiments of the present disclosure, and the apparatus includes: a display module 1101 configured to display a first multimedia resource on a resource display page, wherein the first multimedia resource is of a first genre, and a genre switch control is provided on the resource display page; a first determination module 1102 configured to determine a target switch genre in response to a trigger operation for the genre switch control; an obtaining module 1103 configured to obtain a second multimedia resource based on the first multimedia resource and the target switch genre; wherein the second multimedia resource is of the target switch genre, and the first multimedia resource and the second multimedia resource are of different genres of a same multimedia work; and a switch module 1104 configured to switching from the first multimedia resource switching to the second multimedia resource on the resource display page.

In an optional implementation, the apparatus further includes: a second determination module configured to determine, based on current search behavior information and/or genre preference information of a current user, a genre to be displayed corresponding to the search result of the current user as the first genre. Correspondingly, the displaying module 1101 is specifically configured to display the first multimedia resource of the first genre on the search result page.

In an optional implementation, the switch module 1104 includes: a first display submodule, configured to display a predetermined pop-up-layer panel over the resource display page, and display the second multimedia resource on the predetermined pop-up-layer panel; or, a second display submodule configured to display the second multimedia resource on the resource display page.

In an optional implementation, the genre switch control includes an image-text genre switch control, and the image-text genre switch control includes respective switch sub-controls corresponding to a plurality of image-text segments divided by the first multimedia resource. The first determination module 1102 is specifically configured to: determine an image-text genre in response to a trigger operation for the target switching sub-control. Correspondingly, the switch module 1104 is specifically configured to: switching from the first multimedia resource to the second multimedia resource on the resource display page, with an image-text segment of the second multimedia resource corresponding to the target switch sub-control being positioned for display.

In an optional implementation, the apparatus further includes: a third determination module configured to determine, based on the current time information and/or the genre preference information of a current user, a genre to be displayed corresponding to a recommended content as the first genre. Correspondingly, the display module 1101 is specifically configured to display the first multimedia resource of the first genre on the recommended content display page.

In an optional implementation, the target switch genre is an image-text genre, the second multimedia resource includes a plurality of image-text segments, and at least one of the plurality of image-text segments includes a video segment with an image cover. The apparatus further includes: a playing module configured to, in response to a playback trigger operation for an image cover of a target image-text segment of the at least one image-text segment, play a video segment corresponding to the image cover.

In an optional implementation, the apparatus further includes: a first generating module configured to, in response to a genre edit trigger operation on a post page of a third multimedia resource, generate a fourth multimedia resource of a target edit genre based on the third multimedia resource; and a first posting module, configured to post a multimedia work containing the third multimedia resource and the fourth multimedia resource.

In an optional implementation, the apparatus further includes: a receiving module configured to display the fourth multimedia resource on a resource edit page, and receive an edit operation for the fourth multimedia resource based on the resource edit page.

In an optional implementation, the resource edit page is provided with a genre edit switch control. The apparatus further includes: a fourth determination module configured to determine a target switching edit genre in response to a trigger operation for the genre edit switch control on the resource edit page; a second generating module configured to generate a fifth multimedia resource of a target edit switch genre based on the third multimedia resource; and a second posting module configured to post the multimedia work containing the third multimedia resource, the fourth multimedia resource, and the fifth multimedia resource.

In an optional implementation, the first generating module includes: a dividing submodule, configured to divide a plurality of video segments from the third multimedia resource based on analysis of content of the third multimedia resource; a first generating submodule configured to generate a text segment, a voice segment, and/or a cover image based on the video segment; and a second generating submodule configured to generate a fourth multimedia resource of a target edit genre based on the video segment, the text segment, the voice segment, and/or the cover image.

In the apparatus for multimedia resource processing provided by the embodiments of the present disclosure, displaying a first multimedia resource on a resource display page, wherein the first multimedia resource is of a first genre, and a genre switch control is provided on the resource display page, in response to a trigger operation for the genre switch control, determining a target switch genre, obtaining a second multimedia resource based on the first multimedia resource and the target switch genre, the second multimedia resource is of the target switch genre, the first multimedia resource and the second multimedia resource are of different genres of a same multimedia work, and switching from the first multimedia resource to the second multimedia resource on the resource display page. Therefore, the embodiments of the present disclosure can realize a switching display function for different genres of the same multimedia work based on a target switch control on the resource display page, so that requirements of different users on different display genres of a same multimedia resource are met.

In addition to the foregoing method and apparatus, the embodiments of the present disclosure further provide a computer-readable storage medium, the computer-readable storage medium stores instruction which when executed on a terminal device, cause the terminal device to perform the method for multimedia resource processing in the embodiments of the present disclosure.

The embodiments of the present disclosure further provide a computer program product, which includes a computer program/instruction, and when the computer program/instruction is executed by a processor, the method for multimedia resource processing according to the embodiments of the present disclosure is implemented.

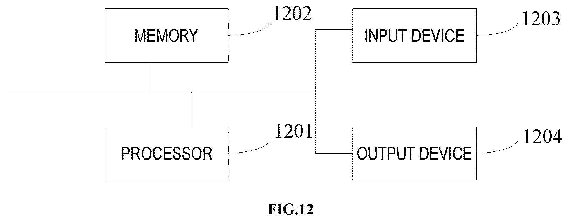

In addition, the embodiments of the present disclosure further provide a device for multimedia resource processing, as shown in FIG. 12, which may include a processor 1201, a memory 1202, an input device 1203, and an output device 1204. There may be one or more processors 1201 in the device for multimedia resource processing, and one processor is used as an example in FIG. 12. In some embodiments of the present disclosure, the processor 1201, the memory 1202, the input device 1203, and the output device 1204 may be connected through a bus or another manner, and FIG. 12 is an example in which a bus is connected.

The memory 1202 may be configured to store software programs and modules, and the processor 1201 executes various functional applications and data processing of the multimedia resource processing device by running software programs and modules stored in the memory 1202. The memory 1202 may mainly include a storage program area and a storage data area, wherein the storage program area may store an operating system, an application program required by at least one function, and the like. In addition, the memory 1202 may include a high-speed random access memory, or may include a non-volatile memory, for example, at least one magnetic disk storage device, a flash memory device, or another volatile solid-state storage device. The input device 1203 may be configured to receive inputted numeric or character information, and generate signal input related to user setting and function control of the device for multimedia resource processing.

Specifically, in this embodiment, the processor 1201 loads an executable file corresponding to the process of one or more application programs into the memory 1202 according to the following instruction, and runs the application program stored in the memory 1202 by the processor 1201, thereby implementing various functions of the device for multimedia resource processing.

It should be noted that, in this specification, relational terms such as "first" and "second" are merely used to distinguish one entity or operation from another entity or operation, and do not necessarily require or imply that any such actual relationship or sequence exists between these entities or operations. Moreover, the terms "comprising," "comprising," or any other variation thereof are intended to cover a non-exclusive inclusion, such that a process, method, article, or apparatus comprising a series of elements includes not only those elements, but also other elements not expressly listed, or elements inherent to such a process, method, article, or apparatus. Without further restriction, the elements defined by the statement "include one" do not preclude the presence of additional identical elements in the process, method, article, or device that includes the elements.

The above descriptions are only specific embodiments of the present disclosure, so that those skilled in the art can understand or implement the present disclosure. Various modifications to these embodiments will be apparent to those skilled in the art, general principles defined herein may be implemented in other embodiments without departing from a spirit or scope of the present disclosure. Accordingly, the present disclosure will not be limited to these embodiments described herein, but is to be accorded a widest scope consistent with the principles and novel features disclosed herein.

## Claims

1. A method for multimedia resource processing, **characterized in that**, the method comprises:
displaying a first multimedia resource on a resource display page; wherein the first multimedia resource is of a first genre, and a genre switch control is provided on the resource display page;
in response to a trigger operation for the genre switch control, determining a target switch genre;
obtaining a second multimedia resource based on the first multimedia resource and the target switch genre; wherein the second multimedia resource is of the target switch genre, and the first multimedia resource and the second multimedia resource are of different genres of a same multimedia work; and
switching from the first multimedia resource to the second multimedia resource on the resource display page.

2. The method of claim 1, **characterized in that**, the resource display page is a search result page, and before the displaying the first multimedia resource on the resource display page, the method further comprises:
determining, based on current search behavior information and/or genre preference information of a current user, a genre to be displayed corresponding to a search result of the current user as the first genre;
correspondingly, the displaying the first multimedia resource on the resource display page comprises:
displaying the first multimedia resource of the first genre on the search result page.

3. The method of claim 1 or 2, **characterized in that**, the switching from the first multimedia resource to the second multimedia resource on the resource display page comprises:
displaying a predetermined pop-up-layer panel over the resource display page, and displaying the second multimedia resource on the predetermined pop-up-layer panel;
or, displaying the second multimedia resource on the resource display page.

4. The method of claim 1 or 2, **characterized in that**, the genre switch control comprises an image-text genre switch control, and the image-text genre switch control comprises respective switch sub-controls corresponding to a plurality of image-text segments divided by the first multimedia resource;
the determining a target switch genre in response to a trigger operation for the genre switch control comprises:
determining an image-text genre in response to a trigger operation for a target switch sub-control;
correspondingly, the switching from the first multimedia resource to the second multimedia resource on the resource display page comprises:
switching from the first multimedia resource to the second multimedia resource on the resource display page, with an image-text segment of the second multimedia resource corresponding to the target switch sub-control being positioned for display.

5. The method of claim 1, **characterized in that**, the resource display page is a recommended content display page, and before the displaying the first multimedia resource on the resource display page, the method further comprises:
determining, based on current time information and/or genre preference information of a current user, a genre to be displayed corresponding to a recommended content as the first genre;
correspondingly, the displaying the first multimedia resource on the resource display page comprises:
displaying the first multimedia resource of the first genre on the recommended content display page.

6. The method of claim 1, **characterized in that**, the target switch genre is an image-text genre, the second multimedia resource comprises a plurality of image-text segments, and at least one of the plurality of image-text segments comprises a video segment with an image cover;
after the switching from the first multimedia resource to the second multimedia resource on the resource display page, the method further comprises:
in response to a playback trigger operation for an image cover of a target image-text segment of the at least one image-text segment, playing a video segment corresponding to the image cover.

7. The method of claim 1, **characterized in that**, the method further comprises:
in response to a genre edit trigger operation on a post page of a third multimedia resource, generating a fourth multimedia resource of a target edit genre based on the third multimedia resource; and
posting a multimedia work containing the third multimedia resource and the fourth multimedia resource.

8. The method of claim 7, **characterized in that**, before the posting the multimedia work containing the third multimedia resource and the fourth multimedia resource, the method further comprises:
displaying the fourth multimedia resource on a resource edit page, and receiving an edit operation for the fourth multimedia resource based on the resource edit page.

9. The method of claim 8, **characterized in that**, the resource edit page is provided with a genre edit switch control, and the method further comprises:
determining a target switch edit genre in response to a trigger operation for the genre edit switch control on the resource edit page;
generating a fifth multimedia resource of the target switch edit genre based on the third multimedia resource; and
posting the multimedia work containing the third multimedia resource, the fourth multimedia resource, and the fifth multimedia resource.

10. The method of claim 7, **characterized in that**, the third multimedia resource is of a video genre, and the generating a fourth multimedia resource of a target edit genre based on the third multimedia resource comprises:
dividing a plurality of video segments from the third multimedia resource based on analysis of a content of the third multimedia resource;
generating a text segment, a voice segment, and/or a cover image based on the video segments; and
generating a fourth multimedia resource of a target edit genre based on the video segments, the text segment, the voice segment, and/or the cover image.

11. A apparatus for multimedia resource processing, **characterized in that** the apparatus comprises:
a display module configured to display a first multimedia resource on a resource display page, wherein the first multimedia resource is of a first genre, and a genre switch control is provided on the resource display page;
a first determination module configured to, in response to a trigger operation for the genre switch control, determine a target switch genre;
an obtaining module configured to obtain a second multimedia resource based on the first multimedia resource and the target switch genre; wherein the second multimedia resource is of the target switch genre, and the first multimedia resource and the second multimedia resource are of different genres of a same multimedia work; and
a switch module configured to switch from the first multimedia resource to the second multimedia resource on the resource display page.

12. A computer-readable storage medium, **characterized in that**, the computer-readable storage medium stores instruction which, when executed on a terminal device, cause the terminal device to perform the method of any of claims 1-10.

13. A device for multimedia resource processing, **characterized by** comprising: a memory, a processor, and a computer program stored in the memory and executable on the processor, wherein the processor executes the computer program to implement the method of any of claims 1-10.
